# EUROPEAN PATENT APPLICATION

(11) **EP 1 455 431 A2**
(43) Date of publication of application: **08.09.2004**
(21) Application number: 04005436.3
(22) Date of filing: 08.03.2004
(51) Int. Cl.: H02J 7/00

(54) **Battery charging device for vehicles driven with electrical motors**

(30) Priority: 07.03.2003 JP 2003061725
(71) Applicant: YAMAHA HATSUDOKI KABUSHIKI KAISHA, Iwata-shi Shizuoka-ken (JP)
(72) Inventor: Terada, Junji, Iwata-shi, Shizuoka-ken (JP)
(74) Representative: Grünecker, Kinkeldey, Stockmair & Schwanhäusser Anwaltssozietät

(57) **Abstract**

The invention relates to a charging device, in particular for a battery of an at least partially electrically motor-driven vehicle.

The invention aims to provide an improved battery charger for motor-driven vehicles, in particular for charging lithium-ion batteries.

Therefore, the invention proposes a charging device, in particular for a battery of an at least partially electrically motor-driven vehicle, comprising a power supply means for supplying power to said battery and further comprising a battery management controller.

## Description

This invention relates to a charging device, in particular for a battery of an at least partially motor-driven vehicle.

In recent years, with background issues of global environment and traffic environment, a concern has become rising over motor-driven vehicles such as motor-driven two-wheelers in which wheels are driven by a motor with a battery as a power source.

Since the motor-driven vehicle uses a battery as power source, the battery capacity (electric capacity) decreases as a result of discharge caused by use of the battery, or the like. Therefore, a charger is connected to the battery and charging is performed from the charger to the battery, thereby replenishing the battery capacity.

In such a motor-driven vehicle, it is important to manage a charging and discharging condition of the battery. Thus, in the motor-driven vehicle, in addition to a controller for controlling a motor, there is provided separately a Battery Management Controller, BMC, for managing a charging and discharging condition of the battery.

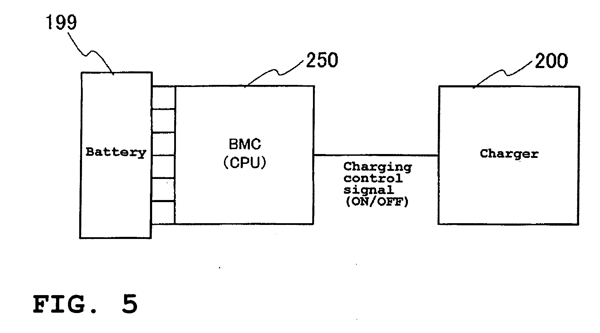

Fig. 5 is a diagram showing the relation between a conventional charger 200, a BMC 250 and a battery 199, as it is known from JP-A-2001-119801.

Hitherto, the battery 199 of 1.2V such as a Ni-Cd or a Ni-MH battery is used, and between the BMC 250 with a built-in CPU (Central Processing Unit) and the charger 200, charging and discharging are performed through ON/OF control by using charging control signal lines.

However, if a lithium-ion battery capable of variably controlling currents and voltages is used, a fine control is required compared to the Ni-Cd or Ni-MH battery.

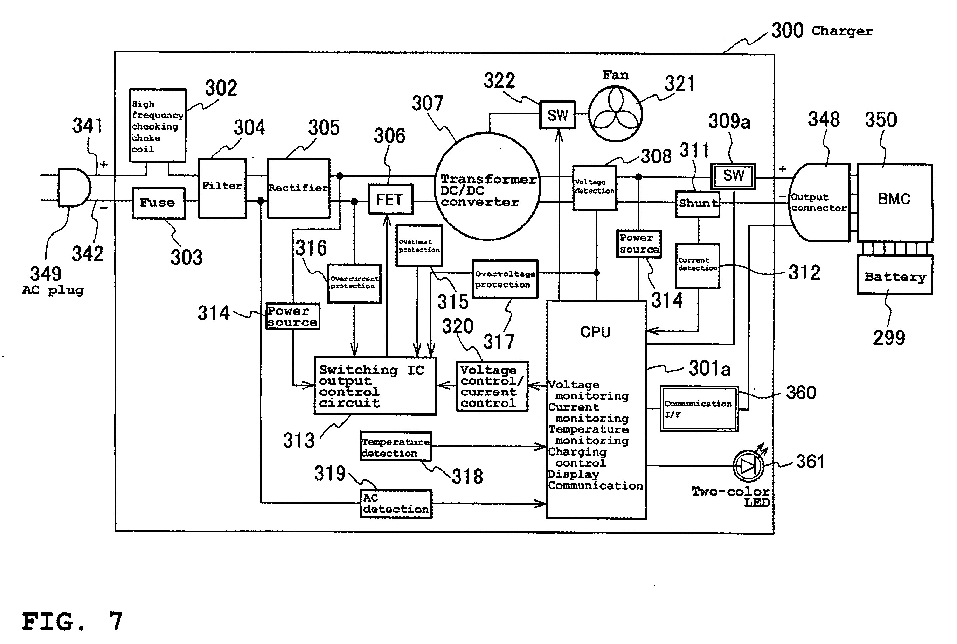

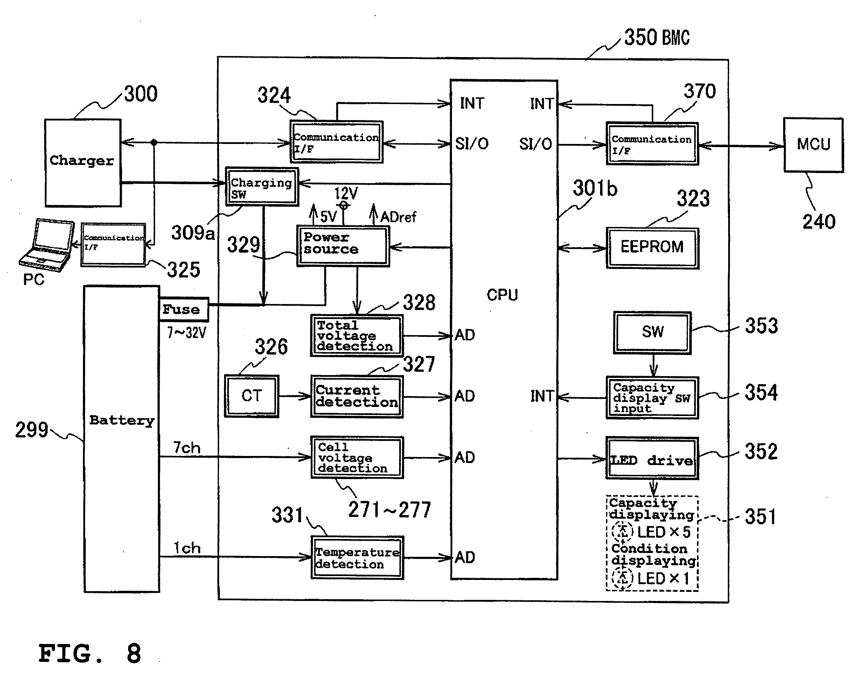

Therefore, the present applicant has developed a system utilizing data communication between a charger 300 and a BMC 350, for the fine control, when a battery 299 as a lithium-ion battery is used. Fig. 7 is a functional block diagram illustrating the function mainly of the charger 300, and Fig. 8 is a functional block diagram illustrating the function mainly of the BMC 350. Such a system is in-house knowledge of the applicant and has not yet been published before. Nevertheless, it will be described in the following to help explain the invention as claimed in this application.

As shown in Fig. 7, the charger 300 has one built-in CPU 301 a for wholly controlling the charger 300. The charger 300 is wired with a hot (+) line 341 and a ground (-) line 342. These lines 341, 342 are connected to an AC plug 349.

In addition, to the charger 300 are connected by the hot line 341 and the ground line 342, a high frequency checking choke coil 302, a fuse 303, a filter 304, a rectifier 305, an FET (Field Effect Transistor) 306, a transformer DC/DC converter 307, a voltage detection circuit 308, a charging SW (Switch) 309, a fuse 310, and a shunt resistor 311 in due order from the side of the AC plug 349 to the side of an output connector 348 connected to the BMC 350.

Of these devices, the high frequency checking choke coil 302 is a coil for blocking high frequency currents of no more than a specified frequency. The filter 304 is designed to separate electric signals of different frequencies. The rectifier 305 is a circuit for rectifying an AC current for conversion into a DC current. An FET 306 is a transistor for amplifying voltages. The timing of switching thereof is controlled by a switching IC output control circuit 313 described later. The transformer DC/DC converter 307 is a converter for insulating the AC plug 349 (primary side) against the output connector 348 (secondary side) and generating a given voltage required for charging the battery 299 from a DC input. The voltage detection circuit 308 is designed to detect a voltage on the battery 299 side. The charging SW 309a is a switch for starting or stopping charging by a command from the CPU 301 a. The shunt resistor 311 is designed for use in detecting a current on the battery 299 side. The current detection circuit 312 is designed to transmit the detection result of the current by the shunt resistor 311 to the CPU 301 a.

In addition, in the charger 300 is provided a switching IC output control circuit 313 for controlling the timing of switching of the FET 306, to switch the voltage applied to the DC/DC converter 307. This switching IC output control circuit 313 is activated by a power source 314 based on the output DC current of the rectifier 305. The switching IC output control circuit 313 controls the timing of switching of the FET 306 based on signals from an overheat protection circuit 315, an overcurrent protection circuit 316 and an overvoltage protection circuit 317.

Of these devices, the overheat protection circuit 315, provided in the vicinity of the FET 306, is designed for use in sending, to the switching IC output control circuit 313, a signal indicating that the temperature of the FET 307 detected by the circuit becomes no smaller than a specified temperature value, and in preventing the temperature of the FET 306 from exceeding the specified temperature as a result of heat development due to repetition of switching operation of the FET 306. The overcurrent protection circuit 316 is designed for use in sending, to the switching IC output control circuit 313, a signal indicating that the current between the FET 306 and the transformer DC/DC converter 307 detected by the circuit becomes no smaller than a specified current value, and used for suppressing the overcurrent flowing in the transformer DC/DC converter 307. The overvoltage protection circuit 317 is designed for use in sending, to the switching IC output control circuit 313, a signal indicating that the voltage applied to the battery 299 based on the output signal of the voltage detection circuit 308 becomes no smaller than a specified voltage value, and in protecting the battery 299.

In addition, in the vicinity of the switching IC output control circuit 313 is provided a temperature detection sensor 318, which sends a signal related to the detected temperature to the CPU 301a. Also, in the charger 300 is provided an AC detection circuit 319 for detecting AC components between the filter 304 and the rectifier 305 to thereby detect a fact that' the AC plug 349 is connected to a socket (external power source), and for use in sending, to the CPU 301, a signal indicating that the fact is detected.

Further, in the charger 300 is provided a voltage control/current control circuit 320 for use . in sending, to the switching IC output control circuit 313 based on signals from the voltage detection circuit 308, current detection circuit 312 and temperature detection sensor 318 or the like, a signal indicating to what extent the voltage and the current control should be performed.

Furthermore, in the charger 300 are provided a fan 321 for cooling the charger 300, and a SW 322 by which ON/OFF switching to the fan 321 can be performed through control of the CPU 301 a.

Further, in the charger 300 is provided a communication I/F 360 for the CPU 301 a to perform data communication with the BMC 350 through an output connector 348. Further, in the charger 300 is provided a two-color LED 361 for indicating charging conditions (in-charging, on-standby, abnormal, or the like), which emits light by a command from the CPU 301 a.

Also, as shown in Fig. 8, the BMC 350 has a single built-in CPU 301 b for wholly controlling the BMC 350 and is provided an EEPROM (Electrically Erasable and Programmable Read Only Memory) in which a program is stored to run the CPU 301 b according to a given algorithm. Also, data reading of the EEPROM 323 by a PC (personal computer) or the like through communication I/Fs 324, 325 is possible, as well as communication with an MCU (Motor Control Unit) 240 for controlling a motor through a communication I/F 370.

The BMC 350 is provided with a current detection circuit 327 connected to a CT (Current Transformer) 326 for use in detecting a current flowing in the battery 299. The current detection circuit 327 detects the current flowing in the battery 299 through the CT 326 to send a signal related to the detection result to the CPU 301 b.

Also, in the charger 300 are provided a total voltage detection circuit 328 for detecting a voltage supplied to the battery 299, to send a signal related to the detection result to the CPU 301 b, and a power source 329 for supplying power to drive the CPU 301 b. The power source 329 utilizes power supplied from an external power source when a charging SW 309b is ON by a command of the CPU 301 b or utilizes power supplied from the battery 299 when the charging SW 309b is OFF, as the case may be.

In addition, charging of the battery 299 can be performed after it is removed from the vehicle and the battery is provided with a plurality of LEDs 351 for indicating the battery capacity (amount of charge) during charging and during the use after the charging. These LEDs 351 are lit by an LED drive circuit 352 and controlled by a command of the CPU 301 b. Also, the BMC 350 is provided with a SW 343, which a user can push, and the LED drive circuit 352 is activated by a capacity display SW input circuit 354 for informing the fact that the SW 343 is pushed.

On the other hand, the battery 299 is configured such that it has a built-in battery module made up of seven cells connected in series. Between these cells are provided cell voltage detection sections 271-277, respectively, arranged such that they each detect voltages of their respective cells and send signals related to the detection results to the CPU 301 b. Also, in the vicinity of any specified cell is provided a temperature detection sensor 331 for detecting the cell temperature, arranged such that it sends a signal related to the result of the cell temperature to the CPU 301 b.

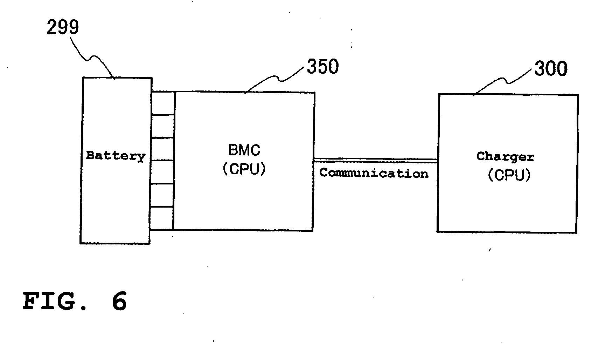

However, in the charging system shown in Fig. 6, for the data communication between the charger 300 and the BMC 350 separated from each other, both the charger 300 and the BMC 350 must have built-in CPUs, individually. These separate bodies cause the increased number of parts, resulting in a problem of cost increase.

It is, therefore, an object of the invention to provide an improved charging device for motor-driven vehicles, in particular for charging lithium-ion batteries used to supply power to a motor for driving wheels of the motor-driven vehicle, preferably along with reduced manufacturing costs.

For a charging device of the above kind, this object is solved in an inventive manner in that the charging device, in particular for a battery of an at least partially electrically motor-driven vehicle, comprises a power supply means for supplying power to said. battery and further comprises a Battery Management Controller.

Since, according to the invention, a Battery Management Controller (BMC) and the charger are unified, an improved charging device 100 is provided. Moreover, manufacturing costs are reduced. Also, communication (signal) lines between the BMC and the charger can be eliminated, thereby further improving the reliability. In particular, even when charging of a lithium-ion battery required for constant current charging and constant voltage charging is performed, it is unnecessary to prepare additional harness for charging control.

Preferably, said Battery Management Controller comprises a condition detection means capable of detecting a condition of charging said battery and/or capable of detecting a condition of the battery.

Further preferably, said charging device comprises a single control means capable of controlling said power supply means based on a detection result of the charging condition and/or the battery condition detected by said condition detection means.

According to still a further preferred embodiment, said charging device further comprises at least one temperature detection device for detecting a temperature within the charging device and/or within said battery, and/or the charging device comprises a fan capable of simultaneously cooling the charging device and the battery.

Moreover, it is possible that said charging device further comprises a programmable and/or erasable storage means capable of storing data for charging and/or detecting a condition of the battery.

Also, since data sending and data receiving is performed to and from an external PC to modify the program (p) or the data in the EEPROM 123 through the communication I/F 125, it is possible to respond to changes in the battery type. Further, since parameters specific to various batteries are provided, more meticulous charging and discharging control can be performed. Furthermore, since the parameters specific to the various batteries are changed, when battery is replaced, the parameters specific to the battery in the charging device can be changed to optimum parameters to a new battery after the replacement, providing more meticulous charging and discharging control.

Preferably, said Battery Management Controller comprises a means for detecting a specific battery and/or a specific type of battery to be charged.

Further, since the charging device 100 comprises the function of a BMC, capacity management of the battery 50, preservation of the history of use of the battery 50, preservation of the history of charging and discharging of the battery 50, and preservation of the history of abnormalities of the battery 50 can be performed. Further, access to the foregoing histories is possible from an external PC through the communication I/F 125, which allows confirmation of histories on abnormalities of the battery 50 and the charging device (charger 100).

According to a further preferred embodiment, a charging and battery management controlling system, comprising at least one replaceable battery and a charging device is provided.

Therein, preferably said battery is capable of variably controlling currents and voltages and, more preferably, said battery is formed by a single battery module made up of cells connected in series, each of said cells preferably comprising a plurality of unit cells connected in parallel.

Furthermore, it is possible that at least one cell voltage detection section is provided between said cells of said battery, said cell voltage detection section being connected to said charging device, preferably to said single control means.

Further preferred embodiments of the invention are subject to the subclaims.

In the following, an embodiment of the invention comprising a motor-driven two-wheeler as a preferred form of a motor-driven vehicle will be described with reference to the accompanying drawings, wherein:
- Fig. 1: is a side view of motor-driven two-wheeler being an example for a device carrying an axial gap type rotary electric machine, according to a preferred embodiment of this invention;
- Fig. 2: is an internal structural diagram of a charging and battery management controlling system in form of a battery box 14;
- Fig. 3: is a functional block diagram illustrating mainly the charger 100 of Fig. 2;
- Fig. 4: is a structural diagram illustrating mainly the battery 50 of Fig. 2;
- Fig. 5: is a diagram showing the relation between a conventional charger 200, a BMC 250, and a battery 199; .
- Fig. 6: is a diagram disclosing a system (as developed but not disclosed by the applicant) showing the relation between a charger 300, a BMC 350, and a battery 299;
- Fig. 7: is a functional block diagram illustrating mainly the charger 300 of Fig. 6; and
- Fig. 8: is a functional block diagram illustrating mainly the BMC 350 of Fig. 6.

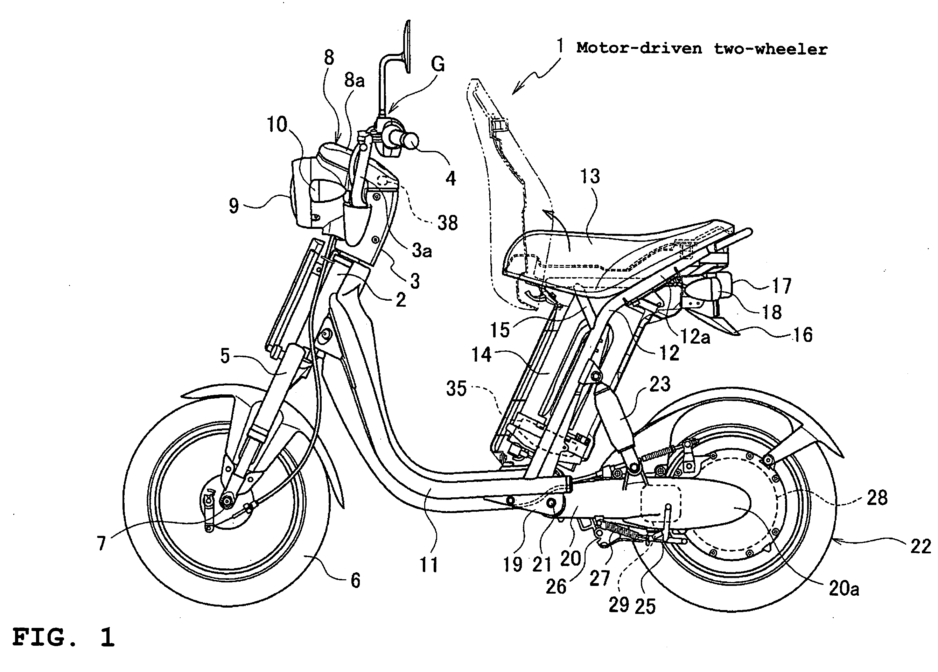

Fig. 1 is a side view of a motor-driven two-wheeler 1 according to a preferred embodiment of this invention.

As shown in Fig. 1, a motor-driven two-wheeler 1 is provided with a head pipe 2 at the forward upper part of its body. In the head pipe, an unillustrated steering shaft for changing the direction of the body is inserted for rotational movement. At the upper end of the steering shaft is mounted a handle support section 3 to which a handle 3a is fixed, and on both sides of the handle 3a are mounted grips 4. An unillustrated grip G on the right side in Fig. 1 constitutes a rotatable throttle grip.

A pair of left and right front forks 5 are mounted at the lower end of the head pipe 2 and extends downwardly therefrom. To the lower ends of these forks 5 is mounted a front wheel 6 through a front axle 7, and the front wheel 6 is supported for rotation by the front axle 7 while being suspended by the front forks 5 in shock absorbing relation.

In front of the handle 3a in the handle support section 3 is disposed a display operation section 8 (sometimes generally referred to as a meter) including a meter 8a which integrates a display section (described later), for example, of liquid crystal for the display of a charging condition of the battery, a running condition of the motor-driven two-wheeler 1, its running mode, or the like, an alarm output section of an alarm (electronic buzzer and the like), and an input section including a plurality of switches (for example, three switches) for inputting information such as numerical or character information. Below the meter 8a in the handle support section 3 is fixed a head lamp 9 as auxiliary equipment (including lamps, alarms or other operating switches), and on both sides of the head lamp 9 are provided flasher lamps 10 as auxiliary equipment, individually (only one flasher lamp is shown in Fig. 1).

A pair of left and right body frames 11 in the approximately L shape in profile extend from the head pipe 2 toward the rear. The body frames 11, each of a round pipe, extend obliquely downward toward the rear from the head pipe 2 and then horizontally toward the rear, resulting in the approximately L shape in profile.

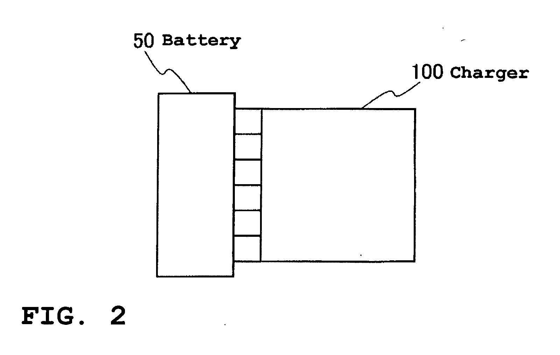

At the rearward side ends of the pair of body frames 11 are provided a pair of left and right seat rails 12 extending obliquely upward from the rearward side ends toward the rear, and the rearward side ends 12a of the seat rails 12 are bent rearward following the shape of a seat 13. Between the pair of the left and right seat rails 12 is provided a battery box 14. The battery box 14 contains a battery case 50 and a charger with a Battery Management Controller, BMC, (hereinafter referred simply to a "charger") 100, as shown in Fig. 2.

In the vicinity of the bent portions of the pair of left and right seat rails 12 is welded a seat stay 15, of an inverted U-shape, inclining obliquely upward toward the front. In the region surrounded by the seat stay 15 and the left and right seat rails 12 is disposed the seat 13 for opening, that is, for up and down rotational movement at the forward end.

To the rear ends of the seat rails 12 is mounted a rear fender 16 and on the rear face thereof a tail lamp 17 as auxiliary equipment. In addition, on the left and right sides of the tail lamp 17 are mounted flasher lamps 18 as auxiliary equipment (only one flasher lamp is shown in Fig. 1).

On the other hand, to the horizontal portions of the pair of left and right body frames 11 under the seat 13 are welded rear arm brackets 19, individually (only one bracket is shown in Fig. 1). On the pair of left and right rear arm brackets 19 is supported for swinging movement the forward end of a rear arm 20 through a pivot shaft 21. On the rear end 20a of the rear arm 20, a rear wheel 22 as a drive wheel is supported for rotation, and the rear arm 20 and the rear wheel 22 are suspended by a rear cushion 23 in shock absorbing relation.

To the rear of the horizontal portions of the pair of left and right body frames 11, a side stand 25 is supported for rotational movement on the left rear arm 20 through a shaft 26, and the side stand 25 is biased by a return spring 27 toward closing.

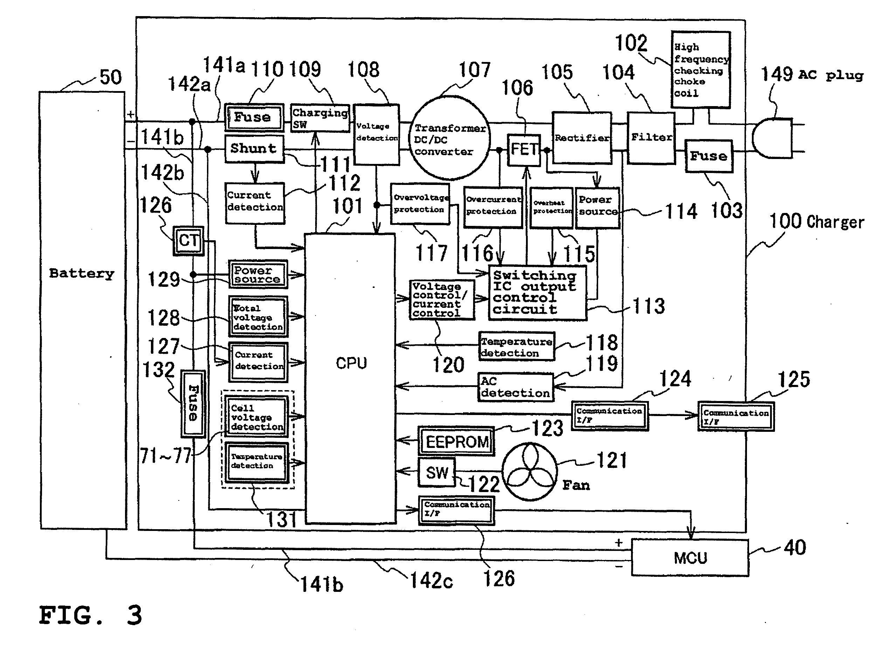

Inside the rear end 20a of the rear arm 20 are mounted an axial gap type electric motor 28 (hereinafter referred simply to an "electric motor") connected to the rear wheel 22 for rotating the rear wheel 22, and a Motor Control Unit, MCU, 40 (not shown in Fig. 1 but in Fig. 3) electrically connected to the electric motor 28 for controlling the electric motor 28.

The display operation section 8 is provided with a meter controller including a meter microcomputer (hereinafter abbreviated to a meter mi-con) for performing setting of the display style of the display section in the meter 8a and drive control of the auxiliary equipment, or the like. In the vicinity of the meter 8a is provided an unillustrated main switch for the ON/OFF operations of the MCU 40 through driver's operations.

On the other hand, the throttle grip G is able to rotate about its axis, and inside the throttle grip G is provided an unillustrated completely-closing switch which is turned ON to send a completely-closing signal to the MCU 40 when the throttle grip G is rotated to a completely-closed position. Also, there provided is an unillustrated potentiometer connected to the throttle grip G by a wire, for detecting the amount of rotational operation in response to the rotational movement of the throttle grip G and sending it to the MCU 40. The completely-closing switch and the potentiometer constitute a throttle section.

Now, a charging device, also designated as a charger 100, according to a preferred embodiment of this invention will be described.

Although the BMC and the charger were previously described to be separate bodies, regarding a charger 100 according to this preferred embodiment, as shown in Fig. 2, a BMC and a charger are unified to form the charger 100 capable of supplying power to a battery 50 for charging, detecting a charging (capacity) condition (power supply: current and voltage) or the like to the battery 50 and a condition of the battery 50 (voltage, current, temperature, and the like), and performing capacity management of the battery 50 and charging and discharging control of the battery 50, based on the detection result of at least one of the detected charging condition and the battery condition.

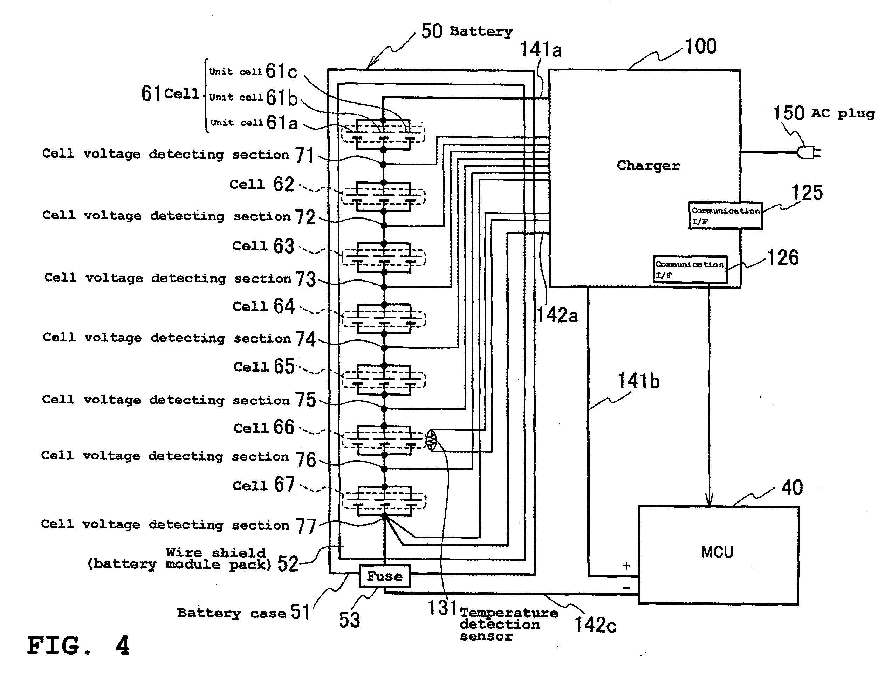

Fig. 3 is a diagram illustrating mainly the charger 100 of Fig. 2, and Fig. 4 is a diagram illustrating mainly the battery 50 of Fig. 2.

As shown in Fig. 3, the charger 100 is wired with a hot (+) line 141 a and a ground (-) line 142a. These lines 141a, 142a are connected to an AC plug 149. The charger 100 has a single built-in CPU (Central Processing Unit) 101 for wholly controlling the charger 100.

In addition, to the charger 100 are connected by the hot line 141 a and the ground line 142a, a high frequency checking choke coil 102, a fuse 103, a filter 104, a rectifier 105, an FET (Field Effect Transistor) 106, a transformer DC/DC converter 107, a voltage detection circuit 108, a charging SW (Switch) 109, a fuse 110, and a shunt resistor 111 in due order from the side of the AC plug 149 to the side of the battery 50.

Of these devices, the high frequency checking choke coil 102 is a coil for blocking high frequency currents of no more than a specified frequency. The filter 104 is designed to separate electric signals of different frequencies. The rectifier 105 is a circuit for rectifying an AC current for conversion into a DC current. The FET 106 is a transistor for amplifying voltages. The timing of switching thereof is controlled by a switching IC output control circuit 113 described later. The transformer DC/DC converter 107 is a converter for insulating the AC plug 149 (primary side) against the battery 50 (secondary side) and generating a given voltage required for charging the battery 50 from a DC input. The voltage detection circuit 108 is designed to detect a voltage on the battery 50 side. The charging SW 109 is a switch for starting or stopping charging by a command of the CPU 101. The shunt resistor 111 is designed for use in detecting a current on the battery 50 side. The current detection circuit 112 is designed to transmit the detection result of the current by the shunt resistor 111 to the CPU.

In addition, in the charger 100 is provided a switching IC output control circuit 113 for controlling the timing of switching of the FET 107, to switch the voltage applied to the DC/DC converter 107. This switching IC output control circuit 113 is activated by a power source 114 based on the output DC current of the rectifier 105. The switching IC output control circuit 113 controls the timing of switching of the FET 107 based on signals from an overheat protection circuit 115, an overcurrent protection circuit 116 and an overvoltage protection circuit 117.

Of these devices, the overheat protection circuit 115, provided in the vicinity of the FET 107, is a circuit for use in sending, to the switching IC output control circuit 113, a signal indicating that the temperature of the FET 107 detected by the circuit becomes no smaller than a specified temperature value, and in preventing the temperature of the FET 106 from exceeding the specified temperature as a result of heat development due to repetition of switching operation of the FET 106. The overcurrent protection circuit 116 is designed for use in sending, to the switching IC output control circuit 113, a signal indicating that the current between the FET 106 and the transformer DC/DC converter 107 detected by the circuit becomes no smaller than a specified current value, and in suppressing the overcurrent flowing in the transformer DC/DC converter 107. The overvoltage protection circuit 117 is designed for use in sending, to the switching IC output control circuit 113, a signal indicating that the voltage applied to the battery 50 based on the output signal of the voltage detection circuit 108 becomes no smaller than a specified voltage value, and in protecting the battery 50.

In addition, in the vicinity of the switching IC output control circuit 113 is provided a temperature detection sensor 118, which sends a signal related to the detected temperature to the CPU 101. Also, in the charger 100 is provided an AC detection circuit 119 for detecting AC components between the filter 104 and the rectifier 105, thereby detecting a fact that the AC plug 149 is connected to a socket (external power source), and sending to the CPU 101 a signal indicating that the fact is detected.

Further, in the charger 100 is provided a voltage control/current control circuit 120 for use in sending, to the switching IC output control circuit 113 based on signals from the voltage detection circuit 108, current detection circuit 112 and temperature detection sensor 118 or the like, a signal indicating to what extent the voltage and the current control should be performed.

Furthermore, in the charger 100 are provided a fan 121 for simultaneously cooling the charger 100 and the battery 50 (battery module 52 described later), and a SW 122 by which ON/OFF switching to the fan 121 can be performed through control of the CPU 101.

Further, in the charger 100 is provided an EEPROM (Electrically Erasable and Programmable Read Only Memory) 123 for storing a program (p) to run the CPU 101 according to a given algorithm, and the following various data. Also, unillustrated RAM monitoring and RAM updating in the charger 100, data reading of the EEPROM 123, data modification in the EEPROM 123 and logging can be performed by a PC (personal computer) through communication I/Fs 124, 125 (logging function). The communication I/F 124 is provided on the circuit board of the charger 100, and the communication I/F 125 is used for changing the voltage for the communication with the PC and the like. A communication I/F 126 for the communication with the MCU 40 is also provided.

Further, the charger 100 is wired with a hot line 141 b branched from the hot line 141 a, and a ground line 142b branched from the ground line 142a. The hot line 141b is connected through a fuse 132 to a plus (+) terminal of the MCU 40 outside the battery box 14.

Also, to the hot line 141b is connected a CT (Current Transformer) 126 for use in detecting the current flowing in the battery 50, and a current detection circuit 127 is provided for detecting the current flowing in the battery 50 through the CT 126, to send a signal related to the detection result to the CPU 101.

Also, in the charger 100 are provided a total voltage detection circuit 128 for detecting a voltage supplied to the battery 50, to send a signal related to the detection result to the CPU 101, and a power source 129 for supplying power to drive the CPU 101 when connected to the hot line 141 b. The power source 129 utilizes power supplied from the AC plug 149 when a charging SW 109 is ON by a command of the CPU 101 or utilizes power supplied from the battery 50 when the charging SW 109 is OFF, as the case may be.

On the other hand, as shown in Fig. 4, the battery 50 is constituted by a battery case 51, and the battery case 51 has a built-in battery module 52 covered by a wiring shield (battery module pack). The battery module 52 is made up of seven cells (Celdas) 61-67 connected in series in this embodiment. The cell 61 is made up of three unit cells 61 a, 61 b, 61 c connected in parallel. As for such parallel connection of these three unit cells, the other cells 62-67 have the same construction.

The combined battery modules, which are made up of a plurality of battery modules 52 connected in parallel, may be used. One or two unit cells may be used, or four unit cells or more may also be used.

Between these cells 61-67 are provided cell voltage detection sections 71-77, respectively, arranged such that they detect voltages of the cells 61-67, to send signals related to the detection results to the CPU 101. In the vicinity of any specified cell (of the cell 66 here) is provided a temperature detection sensor 131 for detecting the temperature of the cell, arranged such that it sends a signal related to the result of the cell 66 temperature to the CPU 101.

The last cell 67 is connected to the ground line 142a led out from the charger 100, and also to the ground line 142c led out from the MCU 40 through a fuse 53.

The construction of the charger 100 and the battery 50 and the control operations of the CPU 101 described above allows implementation of processes as shown below.

The charger 100 detects the voltage, current and temperature of the battery 50 and protects the battery when used from shortening the life of the battery, such as overcharging, overdischarging, charging and discharging at high temperature and charging at low temperature (battery management function).

It controls the residual capacity of the battery by integrating the charging and discharging current (battery capacity management function). It derives charging efficiency and corrects capacity integration during charging. It performs correction to the completion of charging according to charging conditions and the voltage of the battery. It performs correction to the completion of charging according to the temperature at the termination of charging. It derives charging efficiency and corrects capacity integration during discharging. It performs capacity learning according to the voltage, current and temperature of the battery. It controls the start of charging, temperature stand-by, CC charging, CV charging, trickle charging, preliminary charging, full charging and the like according to the battery data (charging function). It communicates with the vehicle as well as with service tools (communication function). It stores, in the EEPROM 123, the history of conditions of use of the battery 50, such as the condition of charging termination, total charging time, frequency of charging, frequency of charging stop, abnormality of the charger, frequency of discharging at sub-zero temperatures, frequency of learning, learning capacity, frequency of self-cutoff and frequency of capacity jump. It protects the battery 50 and the charger 100 by output short-circuit, no-load output voltage, communication contact short-circuit or other protection functions (protection function). It prevents overheat inside the charger 100 and overheat of the battery 50 by means of the cooling fan 121 (supplementary function). It performs detection of abnormalities such as communication abnormality, input-line breakage, abnormality of the charger, abnormality in charging current, abnormality in discharging current, abnormality of the low voltage battery, high temperature abnormality of the battery, low temperature abnormality of the battery, abnormality in upper limit voltage detection, abnormality in upper limit temperature detection, communication abnormality, high temperature abnormality of the charger, abnormality in charger current, and heating abnormality of semiconductors (abnormality treating function).

According to this embodiment as described above, the BMC and the charger are unified to form a charger 100, thereby reducing manufacturing costs. Also, communication (signal) lines between the BMC and the charger can be eliminated, thereby further improving the reliability. In particular, even when charging of a lithium-ion battery required for constant current charging and constant voltage charging is performed, it is unnecessary to prepare additional harness for charging control.

Also, since data sending and data receiving is performed to and from an external PC to modify the program (p) or the data in the EEPROM 123 through the communication I/F 125, it is possible to respond to changes in the battery type. Further, since parameters specific to various batteries are provided, more meticulous charging and discharging control can be performed. Furthermore, since the parameters specific to the various batteries are changed, when battery is replaced, the parameters specific to the battery in the charger can be changed to optimum parameters to a new battery after the replacement, providing more meticulous charging and discharging control.

Further, since the charger 100 has the function of a BMC, capacity management of the battery 50, preservation of the history of use of the battery 50, preservation of the history of charging and discharging of the battery 50, and preservation of the history of abnormalities of the battery 50 can be performed. Further, access to the foregoing histories is possible from an external PC through the communication I/F 125, which allows confirmation of histories on abnormalities of the battery 50 and the charger 100.

Although in this embodiment, a plurality of battery modules may be used in place of a single battery module 52, as described above, if the single battery module 52 is used in particular, a battery with reduced wiring can be formed with a simple structure, further reducing manufacturing costs.

According to this invention as described above, in a charger for motor-driven vehicles for charging a battery to supply power to a motor for driving wheels of a motor-driven vehicle, power supply means for supplying power to the battery for charging, and condition detection means for detecting a condition of charging to the battery and a condition of the battery are provided in an unified charger for motor-driven vehicles; and a single control means is used for controlling the power supply means. Therefore, manufacturing costs can be reduced.

The invention as described above preferably relates to a battery which is formed by a single battery module made up of cells connected in series.

It is to be noted that such a "single battery module" does not include the combined battery modules in which there are a plurality of battery modules made up of cells connected in series and a plurality of these battery modules are connected in parallel.

As described before, for providing an improved charger, respectively a charging device, for motor-driven vehicles for charging a battery to supply power to a motor for driving wheels of a motor-driven vehicle, preferably along with reduced manufacturing costs, it is proposed that a charger 100 has power supply sections (102-120) for supplying power to a battery 50 for charging, condition detection sections (71-77, 123-132) for detecting a condition of charging to the battery 50 and a condition of the battery 50, and a single control section (CPU 101) for controlling the power supply sections, taking account of the charging condition and the condition of the battery detected by the condition detection sections.

### List of Reference Numerals:

1: motor-driven two-wheeler
14: battery box
40: MCU
50: battery
51: battery case
52: battery module pack with wiring shield
53: FUSE
61-67: cell
71-77: cell voltage detection section
100: charging device with BMC (charger)
101: CPU
102: high frequency checking choke coil
103: fuse
104: filter
105: rectifier
106: FET
107: transformer DC/DC converter
108: voltage detection circuit
109: charging SW
110: fuse
111: shunt resistor
112: current detection circuit
113: switching IC output control circuit
114: power source
115: overheat protection circuit
116: overcurrent protection circuit
117: overvoltage protection circuit
118: temperature detection sensor
119: AC detection circuit
120: voltage control/current control circuit
121: fan
122: SW
123: EEPROM
124,125,126: communication I/F
127: current detection circuit
128: total voltage detection circuit
129: power source
131: temperature detection sensor
132: fuse
141a.b: hot (+) line
142a,b,c: ground (-) line

## Claims

1. Charging device, in particular for a battery of an at least partially electrically motor-driven vehicle, comprising a power supply means for supplying power to said battery (50) and further comprising a battery management controller.

2. Charging device according to claim 1, **characterized in that** said battery management controller comprises a condition detection means capable of detecting a condition of charging said battery (50) and/or capable of detecting a condition of the battery (50).

3. Charging device according to claim 2, **characterized in that** said charging device (100) comprises a single control means (101) capable of controlling said power supply means based on a detection result of the charging condition and/or the battery condition detected by said condition detection means.

4. Charging device according to at least one of the claims 1 to 3, **characterized by** further comprising at least one temperature detection device (118,131) for detecting a temperature within the charging device (100) and/or within said battery,
and/or in that the charging device (100) comprises a fan (121) capable of simultaneously cooling the charging device (100) and the battery (50).

5. Charging device according to at least one of the claims 1 to 4, **characterized by** further comprising a programmable and/or erasable storage means (123) capable of storing data for charging and/or detecting a condition of the battery (50),
and/or in that a communication means (124,125) is provided which is connectable to an external service and programming unit, such as a Personal Computer.

6. Charging device according to at least one of the claims 1 to 5, **characterized in that** said battery management controller comprises a means for detecting a specific battery (50) and/or a specific type of battery (50) to be charged.

7. Charging device according to claim 6, **characterized in that** said battery management controller is capable of performing a capacity management of the battery (50), preservation of the history of use of the battery (50), preservation of the history of charging and discharging of the battery (50), and/or preservation of the history of abnormalities of the battery (50) and/or the charging device (100).

8. Charging and battery management controlling system, **characterized by** comprising at least one replaceable battery (50) and a charging device (100) according to at least one of the claims 1 to 7.

9. System according to claim 8, **characterized in that** said battery (50) is capable of variably controlling currents and voltages.

10. System according to claim 8 or 9, **characterized in that** said battery is formed by a single battery module (52) made up of cells (61-67) connected in series, each of said cells (61-67) preferably comprising a plurality of unit cells (61 a,61 b,61 c) connected in parallel.

11. System according to at least on of the claims 8 to 10, **characterized in that** at least one cell voltage detection section (71-77) is provided between said cells (61-67) of said battery (50), said cell voltage detection section (71-77) being connected to said charging device (100), preferably to said single control means (101).
